# EUROPEAN PATENT SPECIFICATION

(11) **EP 2 951 135 B1**
(45) Date of publication and mention of the grant of the patent: **22.11.2017**
(21) Application number: 14704302.0
(22) Date of filing: 29.01.2014
(51) Int. Cl.: C05D 9/00, C05F 11/00

(54) **NUTRIENT SUBSTRATE HAVING AN INCREASED CONTENT OF BIOLOGICALLY USABLE ENERGY**
NÄHRSTOFFSUBSTRAT MIT ERHÖHTEM ANTEIL VON BIOLOGISCH NUTZBARER ENERGIE
SUBSTRAT DE NUTRIMENTS PRÉSENTANT UNE TENEUR ACCRUE EN ÉNERGIE UTILISABLE BIOLOGIQUEMENT

(30) Priority: 29.01.2013 SK 000152013
(43) Date of publication of application: 09.12.2015
(73) Proprietor: Synlacta s.r.o., 069 01 Snina (SK)
(72) Inventor: KELEMECA, Vasil, 069 01 Snina (SK); BROOS, Rene, NL-4818 JK Breda (NL)
(74) Representative: van Someren, Petronella F. H. M.
(86) International application number: PCT/EP2014/051700
(87) International publication number: WO 2014/118217

(56) References cited:
- EP-A1- 0 613 870
- EP-A1- 0 835 854
- EP-A2- 0 149 226
- DE-A1- 3 242 482
- DATABASE BIOSIS [Online] BIOSCIENCES INFORMATION SERVICE, PHILADELPHIA, PA, US; 22 January 2008 (2008-01-22), KOPP KELLY L ET AL: "Clipping management and nitrogen fertilization of turfgrass: Growth, nitrogen utilization, and quality", XP002464568, retrieved from BIOSIS Database accession no. PREV200200475218

## Description

The present invention relates to the area of arable land energy treatment and agrotechnology for growing arable crops. In particular, the present invention relates to a method for preparing a nutrient substrate having an increased content of biologically usable energy, the nutrient substrate thus prepared, and use of the nutrient substrate for nutrition of organisms in the plant-soil ecosystem. The invention further relates to a machine for preparing the nutrient substrate.

The arable land for growing arable crops is currently treated by means of various methods of mechanical crumbling of its surface, necessary for the required structure of the seedbed. Apart from this mechanical treatment, various other organic and inorganic matters are put into the arable land on the assumption that they are nutrients for the future grown crops. In non of these treatments, the content of the biologically available energy in the soil, or added matter, is known. These treatments are thus not based on the fact that soil as an ecosystem has a symbiotic relationship with the ecosystem of the grown crops, and do not take into account the link between this symbiotic relationship and the reception of energy from the sun. In order for these two ecosystems to mutually and permanently survive and prosper in an efficient manner, they must be able to efficiently convert solar energy into biologically usable energy.

In the process of plant photosynthesis, the following reaction occurs:

CO₂ + 2H₂O → (CH₂O) + O₂ + H₂O

In this reaction, water (H₂O) molecules are split into oxygen (O), which through the vents in the leaves escapes into the atmosphere, and hydrogen (H). This process is also referred to as photolysis or de-oxygenation. The hydrogen (H) is protected from atmospheric oxygen by a waxy cuticle C₁₆H₃₃OH, so that re-oxygenation does not occur. The free hydrogen (H) atom, which contains free biologically usable energy, is transported through the roots into the soil where re-oxygenation to H₂O occurs. In the process of re-oxygenation, the biologically usable energy is released and may be used for biochemical synthesis, such as the synthesis of the organic compounds (carbohydrates, fatty acids, amino acids, hormones, lipids, proteins) necessary for the vegetative and generative organs of plants. In the soil, decomposition of plant matter results in the formation of the inorganic compounds CO₂ and H₂O, which do not contain biologically usable energy. CO₂ and H₂O together form carbonic acid (H₂CO₃). The plant root rhizospere plays an important role in the flow of biologically usable energy from the plant photo system into the soil ecosystem, and from the soil ecosystem back to the plant, thereby creating the energy production of arable crops. The cells of living organisms, and thus of plants, can only use the energy from free hydrogen (H) for their cell activity. Therefore, the presence of biologically usable energy from free hydrogen (H) in the soil is needed and irreplaceable.

Soil is an irreplaceable natural source, which is depleted by current intensive use. This has been known since 1789 as the Ruckert theory of soil depletion. Thus far, the science of soil conditions has not defined what is exhausted from soil when the natural fertility is reduced or extinct. Currently, conventional farming methods of land for economic business threaten the sustainability of its natural fertility. Natural fertile soil contains several single cell organisms, such as bacteria and fungi, that are able to break down dead matter, thereby releasing fertilizing elements which may be used by cellular organisms, such as plants and animals. This means that a farmer who produces organic plant products has to provide organic matter, such as manure, to maintain the natural fertility of the soil. EP 0 613 870 A1 discloses a method of producing a fertilizer based on ground grass and a machine comprising means for separating and crushing grass. It is an object of the present invention to provide a method for maintaining the natural fertility of the soil, wherein the method is based on the presence of biologically usable energy in the soil. To this end, the inventors have developed a nutrient substrate that comprises an increased content of biologically usable energy.

In one aspect, the present invention provides a method for preparing a nutrient substrate for application into the soil, comprising:
a) providing natural grass which is gathered in the vegetation phase;
b) drying the natural grass;
c) reducing the dried grass in size, thereby forming a crumbled mass; and
d) moistening the crumbled mass with an aqueous solution of sodium silicate at pH 7-8, thereby obtaining a nutrient substrate.

The nutrient substrate may be sealed and/or stored in an optional step e).

The grass that is provided in step a) is preferably non-utilized raw grass matter. The non-utilized raw grass matter is gathered in the vegetation phase because in this phase the non-utilized raw grass matter reaches a maximum content of biologically usable energy. This energy is present in the form of the biochemical compounds carbon (C), hydrogen (H), and oxygen (O). Before cutting, the raw grass matter contains on average 80 % moisture, 20 % solids, 45 % carbon (C), 7% hydrogen (H), 42 % (O), 1.5 % (N), 4.5 % of a mixture of metallic minerals, and is covered by epiphyte microflora (mainly yeast). After cutting of the grass, the epiphyte microflora quickly starts decomposing the grass matter. Decomposition is the oxidation of the compounds of the grass matter, whereby biologically usable energy is released.

By drying the non-utilized raw grass matter in step b), the microbial decomposition, and thus the release of biologically usable energy, is stopped. As a result, the energy formed during the photolysis (or de-oxygenation) of water is preserved and accumulated. The moisture content of the cut, dried grass may be reduced to 10-15 %. Preferably, the natural grass is dried in the sun.

The dried grass is then reduced in size in step c). Decreasing the size of the dried grass may be accomplished by any means, for instance by cutting and/or crushing. Preferably, the dried grass is cut by a cutter and subsequently crushed into an acceptable structure for symbiotic soil micro-organisms by a crusher. The crumbled grass may for instance be crushed blades of the grass matter and residue dust.

Next, the crumbled mass is evenly moistened with an aqueous solution of sodium silicate (Na₂SiO₄). The crumbled mass is moistened because the epiphyte microflora need water to start decomposing the substrate once the substrate is applied to the soil. Preferably, a biological humidity of 40-50% is reached. At this moisture content, partial decomposition already occurs, which needs to be inhibited until the substrate is applied to the soil This inhibition is accomplished by adding sodium silicate (Na₂SiO₄) to the moistening solution. Sodium silicate (Na₂SiO₄) inhibits the reproduction of the epiphyte microflora. It is hypothesized that the addition of sodium silicate (Na₂SiO₄) reduces the energy loss from the formation of carbonic acid (H₂CO₃) in the soil. When CO₂ and H₂O form carbonic acid (H₂CO₃), -7.76 MJ/kg of energy is consumed. By adding sodium silicate (Na₂SiO₄), this energy loss is reduced to -1.9 MJ/kg.

The aqueous solution of sodium silicate preferably comprises 10% of sodium silicate gel. The sodium silicate gel may be prepared by mixing 20% water-soluble silicate solution and 80% mineral water extract of dry grass mass, and changing the mixture to a gel-like consistency. Preferably, the mixture is changed to a gel-like consistency after 60 hours.

The present invention also provides a sodium silicate gel. Sodium silicate gels in general are known in the art for their application in, for instance, detergents, paper, water treatment, and construction materials. The sodium silicate gel according to the present invention is different from the known gels because it comprises the aqueous extract of dry grass mass, which makes it particularly suitable for application in the preparation of a nutrient substrate with an increased content of biologically usable energy. It is preferred that the sodium silicate gel comprises 20% water-soluble silicate solution in an 80 % aqueous extract of dry grass mass. As already stated above, the sodium silicate gel may be used for preparing a nutrient substrate.

The mineral water extract of dry grass mass may be prepared by enriching 70% of unchlorinated spring water with mineral components from dry grass mass, and separating the liquid extract from the grass mass after 3 days. The mineral water extract of dry grass mass may be used for preparing a sodium silicate gel.

The moistening in step e) may take place, for example, in a sealable plastic pocket or in a machine. Preferably, the moistening takes place in the machine of the present invention.

The cutting of step c) and/or the crushing of step d), and/or the moistening of step e) may be performed by any means. Preferably, the machine of the present invention is used.

The resulting nutrient substrate has an increased content of biologically usable energy With "increased content of biologically usable energy" is meant a content of biologically usable energy which is higher than the content of biologically usable energy of a substrate which has not been produced according to the method of the present invention, in particular substrate which has not been treated with sodium silicate (Na₂SiO₄). As described above, biologically usable energy is the energy of free hydrogen (H) atoms. One kg of free hydrogen (H) contains 120 MJ/kg biologically usable energy. The biologically usable energy may be measured by using a respiratory equipment device, such as the OxiTop® Control (WTW Germany) system. The resulting nutrient substrate is also referred to herein as "substrate", or "Prehumiac".

The present invention thus also provides a nutrient substrate. This nutrient substrate comprises dry grass mass, water, and sodium silicate. The dry grass matter, which is crushed, generally comprises the following nutrients: 45% of carbon (C), 7% of hydrogen (H), 42% of oxygen (O), 1,5% of nitrogen (N), and 4,5% of various other minerals.

It is preferred that the sodium silicate in the nutrient substrate is present as a gel. It is further preferred that the substrate comprises non-oxidised plant chlorophyll C₅₅H₇₂O₅N₄Mg and C₅₅H₇₀O₆N₄Mg. Non-oxidised plant chlorophyll C₅₅H₇₂O₅N₄Mg and C₅₅H₇₀O₆N₄Mg further contribute to the increased biologically usable energy. For instance, a chlorophyll C₅₅H₇₂O₅N₄Mg molecule contains 8.1% hydrogen (H), of which 1.1% will be bound to carbohydrate (CH₂O) and 7.0 % is free and has a biologically usable energy of 8.4 MJ / mol.

The nutrient substrate is obtainable by the method of the present invention. The nutrient substrate may be used to work into the soil for maintenance of the plant-soil ecosystem. In other words, the nutrient substrate may be used for nutrition of organisms in the plant-soil ecosystem. One may say that the nutrient substrate can be used as a fertilizer.

Fertilizers are mixtures used to improve plant growth. Fertilizers usually provide, in different ratios, three main biogenic elements (nitrogen (N), phosphorus (P), potassium (K)), secondary biogenic elements (calcium, sulfur, magnesium), and sometimes trace elements that are useful, such as boron, chlorine, manganese, iron, zinc, copper, molybdenum, etc. Direct fertilizers contain at least one of the essential plant nutrients (N, P, K), either in the organic or mineral form. They supply plants with macro or micro elements, and include for instance industrial and farming fertilizers. Indirect fertilizers do not contain essential nutrients in fundamental quantity, but in the environmental impact of plants and their metabolism they are allowing increased intake of essential nutrients. There include for instance soil conditioners growth regulators (promoters and inhibitors), bacteriological fertilizers, and inhibitors of microbial processes. Although the nutrient substrate of the present invention certainly contains all plant biogenic elements (because it is produced from living grass mixtures) it is not a mixture of elements without energy (oxides) and therefore it is not a direct fertilizer. The nutrient substrate of the present invention is more effective than the currently known soil conditioners that are not based on the content of biologically usable energy for nutrition of plant and animal organisms that live in and on the soil.

By providing the soil with a nutrient substrate having an accumulated content of biologically usable energy, the biologically usable energy in the soil is increased. This results in improved arable crop production.

The total soil fertility is determined by its natural fertility and the addition of an artificial component. If the natural fertility is reduced or even becomes extinct, the artificial component is also reduced or becomes extinct. For this reason, EU legislation and national soil laws govern and limit the use of soil to ensure that a particular user does not compromise the natural fertility of the soil For instance, instead of growing arable crops, a user may be forced to grow grass on 7% of his lands. This means that 7% of the farmer's land can not be used for growing arable crops.

The present invention allows a farmer to use the grass grown on his lands for preparing his own nutrient substrate.

Therefore, the present invention further provides a machine for the preparation of a nutrient substrate from plant matter. The machine comprises means for reducing the size of plant matter, in particular means for cutting and/or means for crushing. The machine may further comprise means for transporting and/or means for separating and/or means for filtering and/or means for moistening and/or means for collecting the nutrient substrate. Preferably, the means for cutting is a cutter, the means for crushing is a crushing machine , the means for transporting is a transport ventilator , the means for separating is an air separator , the means for filtering is a transport air filter, the means for moistening is a moistening solution container , and the means for collecting the nutrient substrate is a substrate container.

The plant matter that is placed into the machine, is preferably dried raw grass matter. More preferably, the plant matter that is placed into the machine is dried raw grass matter having an accumulated content of biologically usable energy. Preferably, the raw grass matter is natural grass gathered in the vegetation phase.

The cutter, crushing machine, transport ventilator, and air separator are driven, for example, by electric motors.

The moistening solution in the moistening solution container is preferably an aqueous solution comprising sodium silicate and having a pH between 7-8 in order to achieve the biological moisture of 60-70 % by weight. More preferably, the moistening solution is a sodium silicate gel comprising 20 % water-soluble silicate solution in a 80 % aqueous extract of dry grass mass.

The formed substrate in the substrate container may be hermetically sealed and/or stored until it is applied into the soil ecosystem.

The formed substrate, which is also referred to as nutrient substrate or substrate, contains a higher level of biologically usable energy than untreated arable land. After working the substrate into soil, the seedbed acquires an increased content of biologically usable energy and as such is ready for the sowing of seeds and growing of arable crops.

The parts of the machine mentioned above may be anchored in anchor bases in the ground. Preferably, the machine is placed in a sheltered area.

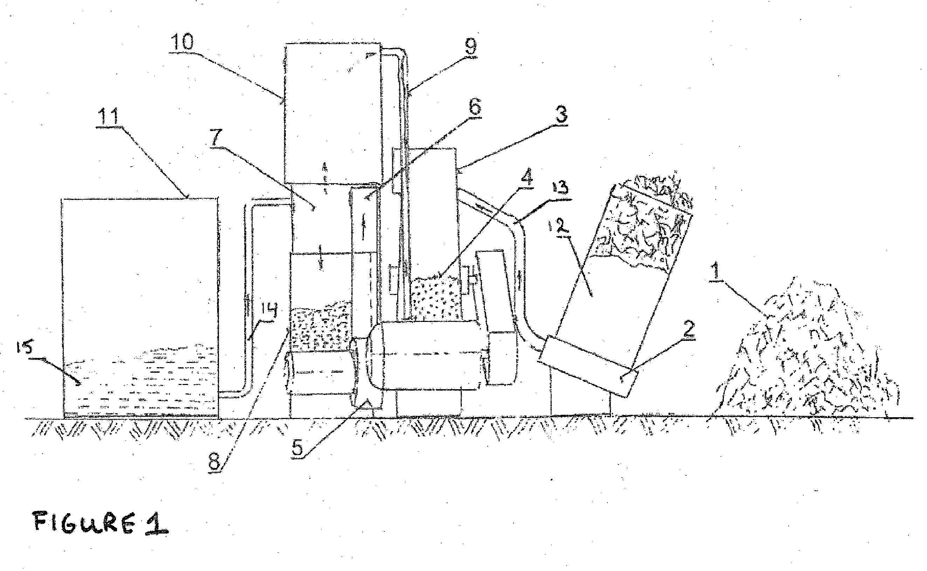

One embodiment of the machine of the invention is shown in Figure 1.

FIG. 1 shows an example of the machine. Plant matter (1) may be placed into the cutter (2) by means of a feeder (12) or in any other manner. If a feeder is used, this may be used to measure out the plant matter. In the cutter (2) the plant matter is cut and then transported to a crushing machine (3) via a connecting pipe (13). Thus, the cutter (2) is connected to the crushing machine (3) via a connecting pipe (13). In the crushing machine (3), the cut plant matter is crushed, thereby forming a crumbled mass (4) comprising grains with a large surface compared to their volume and residue dust. The crushing machine (3) is connected to a transport ventilator (5). The crumbled mass is transported to an air separator (7) by means of an airflow through an outlet pipe (6). The airflow is created by the transport ventilator (5). Thus, the transport ventilator (5) is connected to the air separator (7) via an outlet pipe (6). Above the air separator (7) is a transport air filter (10) that filters the air from the airflow comprising the crumbled mass. The crumbled mass is collected in a substrate container (8) which is present underneath the air separator (7). The filtered air is transported back to the suction part of the transport ventilator (5) through a connecting pipe (9). Thus, the air separator (7) is connected to the transport ventilator (5) via a connecting pipe (9). A moistening solution (15) contained in a moistening solution container (11) may be added to the crumbled mass in the substrate container (8) via an outlet pipe (14) which is connected to the air separator (7). Thus, the moistening solution container (11) is connected to the air separator (7) via a an outlet pipe (14). The moistening solution container (11) may also be connected to the substrate container (8) via an outlet pipe.

The present invention will be further illustrated in the Examples that follow and that are not intended to limit the invention in any way. In the Examples reference is made to the following figures:
FIG.2 shows a diagram of the biologically usable energy measured in Danube Lowland soil (diamonds), Danube Lowland soil treated with 1 g/100 g Prehumiac (squares), and Danube Lowland soil treated with 2 g/100 g Prehumiac (triangles)
FIG.3A shows a diagram of the biologically usable energy measured in soil on which no potatoes were grown (diamonds), soil on which potatoes were to be grown (squares), and soil treated with the nutrient substrate Prehumiac on which potatoes were to be grown (triangles), before planting of potatoes, expressed in MJ/m2 measured at 25°C.
FIG.3B shows a diagram of the biologically usable energy measured in soil on which no potatoes were grown (diamonds), soil on which potatoes were to be grown (squares), and soil treated with the nutrient substrate Prehumiac on which potatoes were to be grown (triangles), before planting of potatoes, expressed in kJ/g measured at 20°C.
FIG.4A shows a diagram of the biologically usable energy measured in soil on which no potatoes were grown (diamonds), soil on which potatoes were grown (squares), and soil on which potatoes were grown and was enriched with nutrient substrate (Prehumiac) (triangles), after harvesting potatoes, expressed in MJ/m2 measured at 20°C.
FIG.4B shows a diagram of the biologically usable energy in soil on which no potatoes were grown (diamonds), soil on which potatoes were grown (squares), and soil on which potatoes were grown and was enriched with nutrient substrate Prehumiac (triangles), after harvesting potatoes, expressed in kJ /g measured at 20°C.
FIG.5 shows a diagram of the antioxidant capacity of soil without substrate (diamonds), soil with applied substrate (squares), and leachate from the soil substrate (triangles), expressed in kJ /g measured 20°C.
FIG.6 shows a diagram of the biologically usable energy measured in plant matter as a comparison of antioxidant capacity of Prehumiac 1 (squares) and Prehumiac 2 (triangles) to the antioxidant capacity of herbal tea from business network (shops) (diamonds), expressed in kJ/g at 20°C.
FIG.7 shows a diagram of the biologically usable energy measured in wheats that have been produced by the agrochemical system in Pribeník soil (diamonds) and Kamenica soil (squares), and wheat produced by an organic system in which Prehumiac (triangles) has been applied to Kamenica soil.
FIG.8 shows the root system of wheat grown by an organic system.
FIG.9 shows the root system of wheat grown by an agrochemical system.
FIG. 10 shows the ears of a wheat plant grown on untreated soil (control), a wheat plant grown on soil treated with NPK (NPK), and a wheat plant grown on soil treated with Prehumiac

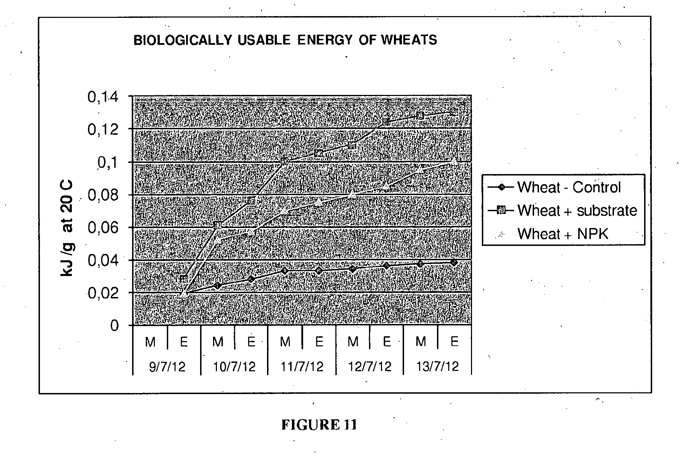

FIG. 11 shows the biologically usable energy measured in wheat grown on untreated soil (control) (diamonds), wheat grown on soil treated with NPK (triangles), and wheat grown on soil treated with Prehuiniac (squares).

### EXAMPLES

### EXAMPLE 1

A nutrient substrate was prepared by mowing a grassland with non-utilized grass. The mowed grass matter was left to dry in the sun. Then the sun-dried grass matter was fed to the machine according to the present invention. In this process a sodium silicate solution (Na₂SiO₄), E550 was added. The resulting substrate is also referred to as "nutrient substrate", or "Prehumiac".

### EXAMPLE 2

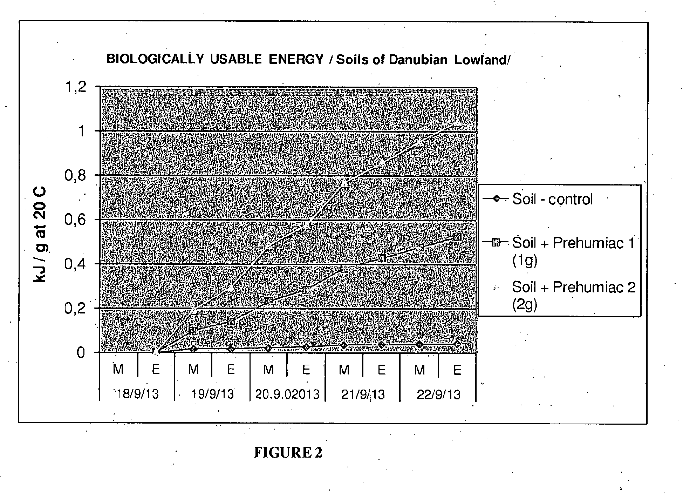

The biologically usable energy was measured in soil used to cultivate medicinal plants for use as alternative medicines to treat various diseases. From an area of 0.2 hectare of Danube Lowland soil (this is the most fertile black soil land in Slovakia), 4 kg of soil was taken and hermetically sealed in a plastic container for 48 hours. After 48 hours, 3 samples were collected:
a) 100 g soil sample (control)
b) 99 g soil sample + 1 g substrate (Prehumiac 1)
c) 98 g soil sample + 2 g substrate (Prehumiac 2)
For samples (b) and (c), Prehumiac was added to the soil in the plastic container and manually mixed into the soil before placing the sample in an OxiTop® Control apparatus. The samples were incubated in the OxiTop® Control apparatus for 6 days at 20°C: 2 days for sample stabilization, and 4 days for incubation with or without nutrient substrate (Prehumiac) and measurement of the biological oxygen demand in mg/kg of the sample. The biological oxygen demand is converted into its biological usable energy equivalent in kJ/g of the sample. The results are shown in Figure 2.

Figure 2 shows that the soils treated with Prehumiac 1 (squares) and Prehumiac 2 (triangles) have a higher content of biologically usable energy than untreated soil (diamonds).

### EXAMPLE 3

The biologically usable energy of soil before and after the planting of potatoes was measured using the OxiTop® apparatus as described above. The samples that were measured are:
a) 100 g soil on which no potatoes were grown (control)
b) 100 g soil on which potatoes were grown without substrate
c) 98 g soil on which potatoes were grown and 2 g substrate (Prehumiac 2)

For sample (c), Prehumiac was applied to the soil before taking the soil sample.

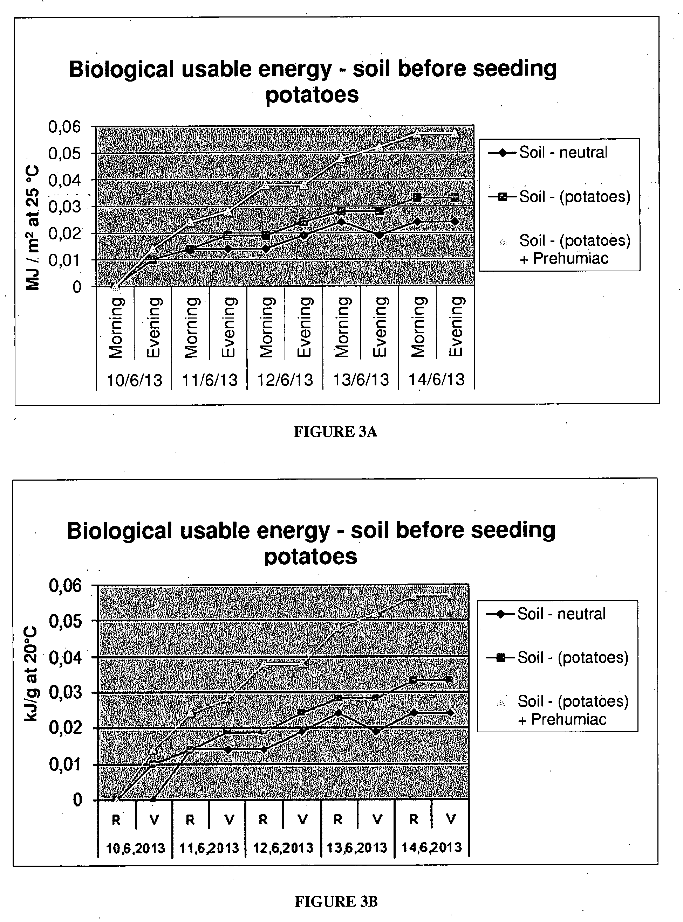

First, samples were measured before potatoes were planted into the soil. The results of these measurements are shown in Figures 3A and 3B.

Figures 3A and 3B show that the biologically usable energy is increased in the soil treated with Prehumiac. A comparison of Figures 3A and 3B indicate that the farmer is required to use unit MJ/m2, and that for laboratory comparative testing unit kJ/g is to be used.

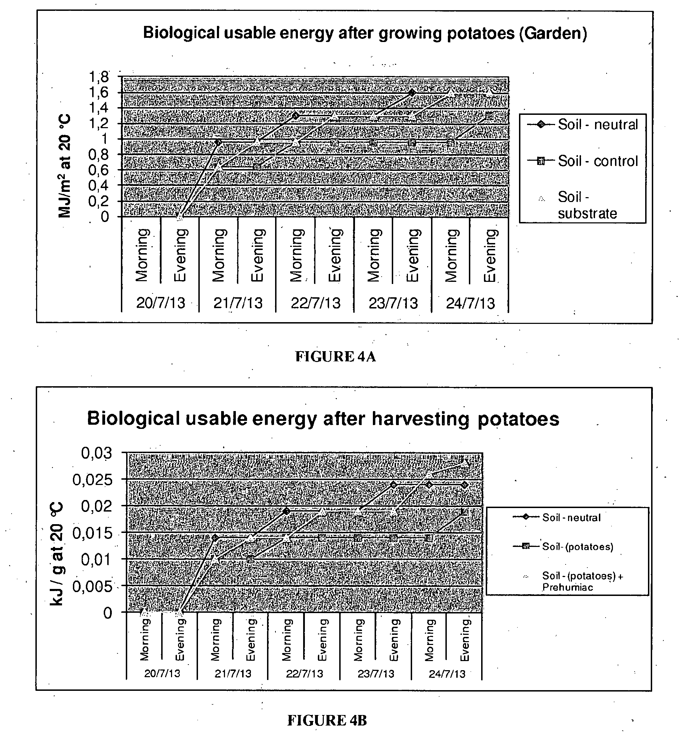

Next, potatoes were planted and grown to maturity. When mature, the potatoes were harvested and again soil samples were taken for measurement of the biologically usable energy. The results are shown in Figures 4A and 4B.

Figures 4A and 4B show that the biologically usable energy of soil treated with Prehumiac is comparable to that of the soil on which no potatoes were grown. This shows that the soil treated with Prehumiac was not fatigued by the growing potatoes. The soil not treated with Prehumiac was fatigued by the growing potatoes, as its biologically usable energy is lower than that of the soil on which no potatoes were grown. It can thus be concluded that the application of Prehumiac to soil prevents the exhaustion of the soil when growing crops.

### EXAMPLE 4

Biologically available energy is a measure of antioxidant capacity. The purpose of this experiment was to compare the antioxidant capacity of the nutrient substrate (Prehumiac) with the antioxidant capacity of humic acids.

In every soil in which plants vegetate a biochemical oxidation and reduction process between fulvonic acids and humic acids takes place, wherein biologically usable energy is released and consumed. Fulvonic acids are formed in the soil by microbial decomposition of carbohydrates of dead plant matter without a content of biologically usable energy. Plants in the growing phase transport the nascent hydrogen (H₂) from the photolysis of water (H₂O) through the root system into the soil. This hydrogen (H₂) reduces the fulvonic acids to humic acids containing biologically usable energy. Fulvonic acids have an excess of oxygen (O) relative to hydrogen (H), and therefore do not consume additional oxygen in the measurement. Humic acids have an excess of hydrogen (H) relative to the oxygen (O), and therefore they consume the oxygen (O) in the measurement. the measurement of biological usable energy in soil is a measurement of this energy in soil humic acids.

Naturally fertile soil must have at least 1.5 times more humic acids than fulvonic acids. Oxygen (O) is mineralized in the soil By total mineralization of soil occurs desert. Hydrogen (H) humificates the soil and thus maintains and enhances its natural fertility.

Dry weight of green grass mass from which Prehumiac is made has an excess of hydrogen (H) relative to the oxygen (O). Therefore, with the mixturc of this dry mass and water (H₂O), part of the hydrogen (H) passes into its leachate. Therefore, the content of biologically usable energy of the leachate is the content of biologically usable energy of humic acids.

The biologically usable energy was measured as previously described. The samples that were measured are:
a) 100 g soil sample (control)
b) 98 g soil sample + 2 g nutrient substrate (Prehumiac)
c) 100 g leachate from 20% by weight of nutrient substrate and 80% spring water

### (leachate)

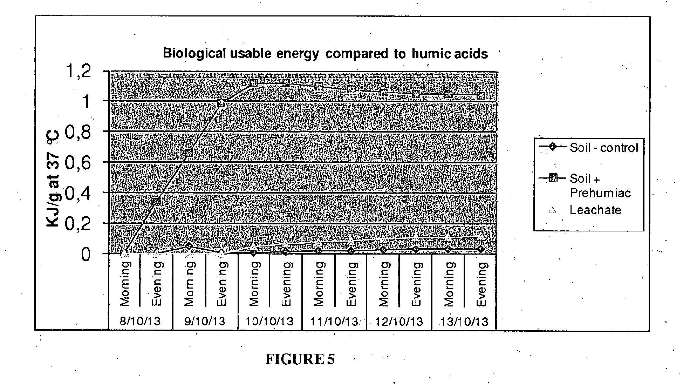

The results are shown in Figure 5.

Figure 5 shows that the antioxidant capacity of soil treated with the nutrient substrate is much higher than that of untreated soil and the leachate from the substrate. This means that the antioxidant capacity of the nutrient substrate is much higher than the antioxidant capacity of humic acids.

### EXAMPLE 5

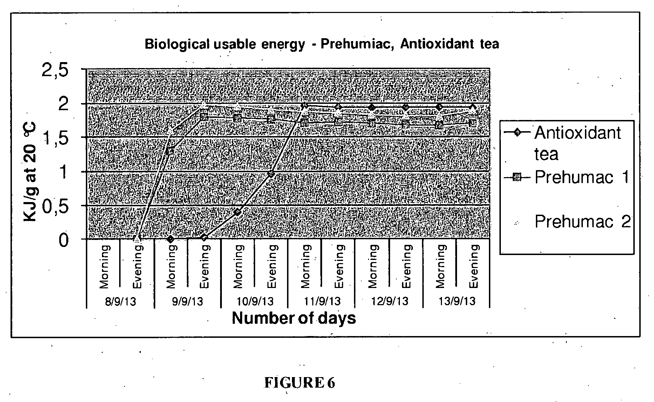

Herbal tea from business network was bought from the shops and crushed. A sample of 100 g was taken for measurement of its biologically usable energy. This was compared with the biologically usable energy as measured in 100 g of Prehumiac. The results are shown in Figure 6.

Figure 6 shows that the quality of food should be determined by a complex value of their antioxidant capacity rather than just their health benefit (health certificate).

### EXAMPLE6

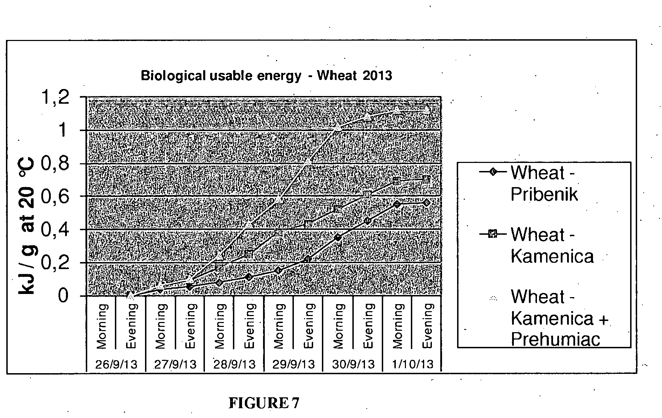

50 kg of wheat was crushed from which a sample of 100 g was taken. The biologically usable energy in this sample was measured as previously described. The results are shown in Figure 7.

Figure 7 shows that wheat produced by an organic system in which Prehumiac was applied contains more biological usable energy that wheats produced by the agrochemical systems used in Pribenik and Kamenica.

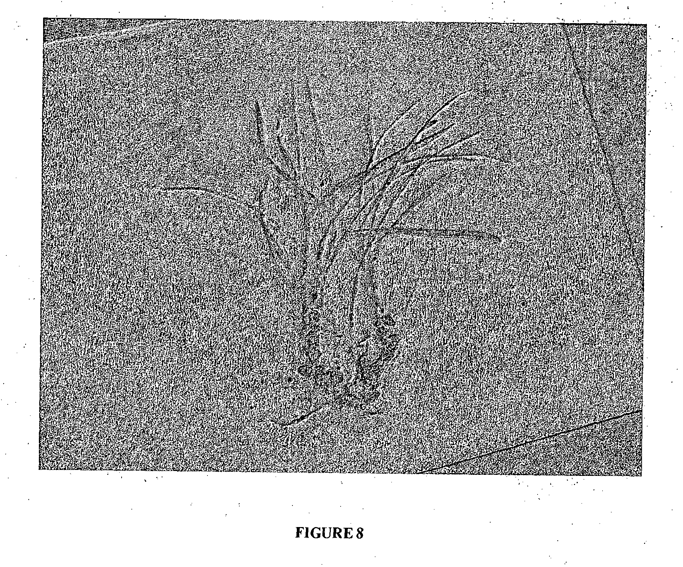

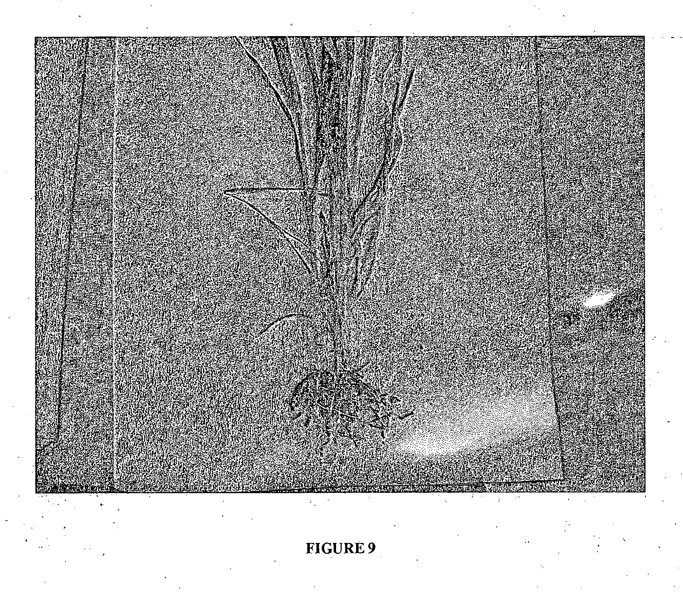

Photos were taken of the root system of the wheat plants grown in soil treated with Prehumiac and wheat plants grown in an agrochemical system. Figures 8 and 9 show that the organic wheat after its maturation is more resistant to losing its nutritional value for an extended period of time.

### EXAMPLE 7

Winter wheat was established after the previous crop of winter form of oilseed rape. The size of the experimental area was 10.820 m² where the area of one variant was 901.66 m². The experiment was single-factor in four replications. The experiment was established with a minimum of agrotechniques, with the following variants of nutrition:
VI-NPK (15:15:15) -300 kg.ha⁻¹;
V2 - nutrient substrate (Prehumiac) - 600 kg.ha⁻¹;
V3 - non-fertilized control.

After the harvest of winter oilseed rape, the shallow stubble tillage was made. On 13 October 2011, soil was prepared with a Subsoiler to a depth of 150 mm. Grass substrate and NPK were applied by hand on 14 October 2011. Subsequently, the fertilizers were incorporated into the soil by the Subsoiler. Sowing took place with the Great Plains seeder on 18 October 2011.

The organic substrate is a substrate of organic nutrients with a high redox capacity. After extensive measurements of redox capacities of different available resources and with respect to cost ratio of their production, natural grasses was considered as the most effective material with sufficient redox capacity.

In the experiment a granular fertilizer NPK with the nutrients nitrogen (N), phosphorus (P), and potassium (K) in a ratio of 15:15:15 was also used.

Crop yield parameters of winter wheat were evaluated. Statistical methods of multifactor analysis of variance have been used in this evaluation.

The course of the experiment with winter wheat was significantly influenced by the course of meteorological factors on the experimental station from soil preparation to the harvesting of winter wheat, however, it should be noted that variations of nutrition had no effect on the individual phonological characteristics.

**Table 1: Phonological observations of winter wheat during vegetation**

| Phenological data | Date |
|---|---|
| Seeding | 17 October 2011 |
| Germination | 14 November 2011 |
| Rooting | 28 November 2011 |
| Tillering | 9 April2012 |
| The first knuckle | 14 May2012 |
| Start of stalking | 24 May2012 |
| Start of earing | 28 May2012 |
| Start of flowering | 1 June2012 |
| Milk maturity | 19 June 2012 |
| Wax maturity | 4 July 2012 |
| Full maturity | 12 July 2012 |
| Harvest | 19 July 2012 |

Due to the completeness and developmental status of the vegetation, ammonium nitrate has been applied to all variants. The first additional fertilization was 28 February 2012 at the dose of 40 kg.ha⁻¹ of pure nitrogen and the same dose was repeated on 10 April 2012. Herbicide Arrat was applied against weeds at the dose of 200 g.ha⁻¹. Due to the lower density of vegetation, there was no need to apply fungicides. The harvesting was made 19 July 2012. Results are presented in Table 2. The highest yield was achieved on a grassy substrate variant: 4,34 t.ha⁻¹. This yield was about 21.23 % higher than in the unfertilized variant: 3,58 t.ha⁻¹. With the application of 300 kg.ha⁻¹ of NPK (15:15:15) into the soil was reached nearly the same yield as in the unfertilized variant: 3,59 t. ha⁻¹.

**Table 2: Grain yield of winter wheat according to the variations of fertilization in t.ha⁻¹ at 14% dry matter in 2012.**

| Fertilization | 1. repetition | 2. repetition | 3. repetition | 4. repetition | Average | % |
|---|---|---|---|---|---|---|
| NPK | 3,67 | 3,55 | 3,56 | 3,58 | 3,59 | 100,28 |
| Substrate | 4,44 | 4,32 | 4,31 | 4,27 | 4,34 | 121,23 |
| Control | 3,63 | 3,62 | 3,59 | 3,49 | 3,58 | 100,00 |

From the annual results are arising significant differences in harvests between the variant with the application of the substrate and the variants with the application of NPK and the unfertilized control. Application of the substrate resulted in a significant increase in crop harvest.

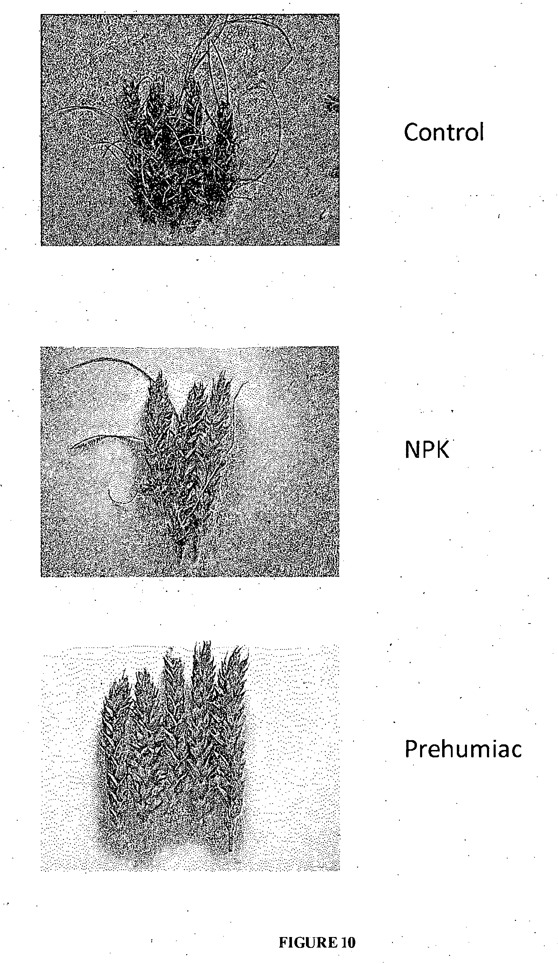

Also the quality of the crop was improved as shown in Figure 10. The ears of the control plants and plants fertilized with NPK contained germinated seeds (green treads), which indicates that these plants were in need of solar energy. The ears of the plants grown on soil with added nutrient substrate (Prehumiac) did not contain germinated seeds, indicating that these plants did not need this photosynthesis energy.

The biologically usable energy in grains of these plants were also measured. The grains from the plant grown on soil with added nutrient substrate (Prehumiac) showed the highest value.

## Claims

1. Method for preparing a nutrient substrate for application into the soil, comprising:
a) providing natural grass which is gathered in the vegetation phase;
b) drying the natural grass;
c) reducing the dried grass in size, thereby forming a crumbled mass;
d) moistening the crumbled mass with an aqueous solution of sodium silicate at pH 7-8, thereby obtaining a nutrient substrate.

2. Method according to claim 1, wherein the sodium silicate is present as a gel.

3. Nutrient substrate comprising dried grass mass, water, and sodium silicate.

4. Nutrient substrate according to claim 3, wherein the substrate further comprises non-oxidised plant chlorophyll C₅₅H₇₂O₅N₄Mg and C₅₅H₇₀O₆N₄Mg.

5. Nutrient substrate according to claim 3 or 4 obtainable by the method according to claim 1 or 2.

6. Use of a nutrient substrate according to any one of claims 3-5 for nutrition of organisms in the plant-soil ecosystem.

7. Machine comprising means for cutting (2) which is connected to means for crushing (3), to which means for transporting (5) is connected, an outlet (6) leading from the means for transporting (5) to means for separating (7), the means for separating (7) being connected to means for filtering (10) which is connected to the suction part of the means for transporting (5) via a connection pipe (9), the means for separating (7) also being connected to means for collecting (8), and the means for separating (7) further being connected to means for moistening (11) via an outlet pipe.

8. Machine according to claim 7, wherein the means for cutting is a cutter and/or the means for crushing is a crushing machine and/or the means for transporting is a transport ventilator and/or and/or the means for separating is an air separator and/or the means for filtering is a transport air filter and/or the means for moistening is a moistening solution container and/or the means for collecting the nutrient substrate is a substrate container.

9. Method according to claim 1 or 2, wherein the machine according to claim 7 or 8 is used.

## Patentansprüche

1. Verfahren zur Herstellung eines Nährstoffsubstrats für die Anwendung im Boden, das aufweist:
a) Bereitstellen von natürlichem Gas, das in der Vegetationsphase gewonnen wird;
b) Trocknen des natürlichen Grases;
c) Verringern der Größe des natürlichen Grases, wobei eine zerbröselte Masse ausgebildet wird;
d) Befeuchten der zerbröselten Masse mit einer wässrigen Lösung aus Natriumsilikat mit einem pH-Wert von 7 - 8, wodurch ein Nährstoffsubstrat erhalten wird.

2. Verfahren nach Anspruch 1, wobei das Natriumsilikat als ein Gel vorliegt.

3. Nährstoffsubstrat, das getrocknete Grasmasse, Wasser und Natriumsilikat aufweist.

4. Nährstoffsubstrat nach Anspruch 3, wobei das Substrat ferner nicht oxidiertes Pflanzenchlorophyll C₅₅H₇₂O₅N₄Mg und C₅₅H₇₀O₆N₄Mg aufweist.

5. Nährstoffsubstrat nach Anspruch 3 oder 4, das mit dem Verfahren nach Anspruch 1 oder 2 gewinnbar ist.

6. Verwendung eines Nährstoffsubstrats nach einem der Ansprüche 3 - 5 für die Ernährung von Organismen in dem Pflanzen-Boden-Ökosystem.

7. Vorrichtung, die aufweist: eine Einrichtung zum Schneiden (2), die mit einer Einrichtung zum Zerdrücken (3) verbunden ist, mit der eine Einrichtung zum Transportieren (5) verbunden ist, einen Auslass (6), der von der Einrichtung zum Transportieren (5) zu einer Einrichtung zum Trennen (7) führt, wobei die Einrichtung zum Trennen (7) mit einer Einrichtung zum Filtern (10) verbunden ist, die über eine Saugrohrleitung (9) mit dem Ansaugteil der Einrichtung zum Transportieren (5) verbunden ist, wobei die Einrichtung zum Trennen (7) auch mit einer Einrichtung zum Sammeln (8) verbunden ist und die Einrichtung zum Trennen (7) ferner über eine Auslassrohrleitung mit einer Einrichtung zum Befeuchten (11) verbunden ist.

8. Vorrichtung nach Anspruch 7, wobei die Einrichtung zum Schneiden ein Schneidwerkzeug ist, und/oder die Einrichtung zum Zerdrücken eine Mahlanlage ist, und/oder die Einrichtung zum Transportieren ein Tansportlüfter ist, und/oder die Einrichtung zum Trennen ein Luftsortierer ist, und/oder die Einrichtung zum Filtern ein Transportluftfilter ist, und/oder die Einrichtung zum Befeuchten ein Befeuchtungslösungsbehälter ist, und/oder die Einrichtung zum Sammeln des Nährstoffsubstrats ein Substratbehälter ist.

9. Verfahren nach Anspruch 1 oder 2, wobei die Vorrichtung nach Anspruch 7 oder 8 verwendet wird.

## Revendications

1. Procédé de préparation d'un substrat de nutriments à des fins d'application dans le sol, comprenant :
a) la fourniture d'une herbe naturelle qui est recueillie dans la phase de végétation ;
b) le séchage de l'herbe naturelle ;
c) la réduction de la taille de l'herbe sèche, pour ainsi former une masse émiettée ;
d) l'humidification de la masse émiettée avec une solution aqueuse de silicate de sodium à un pH de 7 à 8, pour ainsi obtenir un substrat de nutriments.

2. Procédé selon la revendication 1, dans lequel le silicate de sodium est présent sous la forme d'un gel.

3. Substrat de nutriments comprenant une masse d'herbe sèche, de l'eau et du silicate de sodium.

4. Substrat de nutriments selon la revendication 3, dans lequel le substrat comprend en outre une chlorophylle végétale non oxydée C₅₅H₇₂O₅N₄Mg et C₅₅H₇₀O₆N₄Mg.

5. Substrat de nutriments selon la revendication 3 ou 4 pouvant être obtenu par le procédé selon la revendication 1 ou 2.

6. Utilisation d'un substrat de nutriments selon l'une quelconque des revendications 3 à 5 pour la nutrition des organismes se trouvant dans l'écosystème plante-sol.

7. Machine comprenant un moyen de coupe (2) qui est raccordé à un moyen de broyage (3), auquel un moyen de transport (5) est raccordé, une sortie (6) conduisant du moyen de transport (5) à un moyen de séparation (7), le moyen de séparation (7) étant raccordé à un moyen de filtration (10) qui est raccordé à la partie aspiration du moyen de transport (5) par l'intermédiaire d'un tuyau de raccordement (9), le moyen de séparation (7) étant également raccordé à un moyen de collecte (8), et le moyen de séparation (7) étant en outre raccordé à un moyen d'humidification (11) par l'intermédiaire d'un tuyau de sortie.

8. Machine selon la revendication 7, dans laquelle le moyen de coupe est un dispositif de coupe et/ou le moyen de broyage est une machine de broyage et/ou le moyen de transport est un ventilateur de transport et/ou le moyen de séparation est un séparateur à air et/ou le moyen de filtration est un filtre d'air de transport et/ou le moyen d'humidification est un récipient pour solution d'humidification et/ou le moyen de collecte du substrat de nutriments est un récipient pour substrat.

9. Procédé selon la revendication 1 ou 2, dans lequel la machine selon la revendication 7 ou 8 est utilisée.
